# EUROPEAN PATENT APPLICATION

(11) **EP 1 743 811 A1**
(43) Date of publication of application: **17.01.2007**
(21) Application number: 06009971.0
(22) Date of filing: 15.05.2006
(51) Int. Cl.: B60R 21/239

(54) **Air bag and air bag apparatus**

(30) Priority: 15.07.2005 JP 2005207266
(71) Applicant: TAKATA CORPORATION, Minato-ku, Tokyo 106-8510 (JP)
(72) Inventor: Abe, Kazuhiro, Tokyo 106-8510 (JP)
(74) Representative: Banzer, Hans-Jörg

(57) **Abstract**

In order to provide an air bag (10) such that a predetermined value of the inner pressure of the air bag (10) at which a vent hole (13) is opened can be easily set to a target value, and an air bag apparatus including this air bag (10), a sheet (20) having an opening (21) to be located over the vent hole (13) is disposed on the outside of a rear panel (12) and joined to the edge of the vent hole (13). A first half and a second half of the sheet (20) with the opening (21) in between are joined together with a tear seam (23), thereby closing the vent hole (13). This tear seam (23) is configured to release the joining when the inner pressure of the air bag has a predetermined value or more. When the air bag (10) is inflated, until the inner pressure of the air bag (10) reaches the predetermined value, the vent hole (13) is closed by the sheet (20) and gas is not discharged from the air bag (10) through the vent hole (13). Therefore, deploying of the air bag (10) is facilitated (accelerated). When the inner pressure of the air bag has the predetermined value or more, the tear seam (23) breaks and the vent hole (13) is opened.

## Description

The present invention relates to an air bag having a vent hole that absorbs the impact by discharging gas from the inside of the air bag to the outside of the airbag, and more specifically, it relates to an air bag having a control device for opening and closing this vent hole. In addition, the present invention relates to an air bag apparatus including this air bag.

### Background Art

It is well known to provide a vent hole in an air bag, to discharge gas from the inside of the air bag through the vent hole when an occupant or the like of a vehicle crashes into the inflated air bag, and to thereby absorb the impact exerted on the occupant or the like.

In Japanese Unexamined Patent Application Publication No. 2000-16228, there is described an air bag in which a vent hole is covered by a lid member until the gas pressure of the inside of the air bag reaches a predetermined value and when the gas pressure exceeds the predetermined value, the lid member is opened by the gas pressure so as to open the vent hole.

In this document, an air bag for the driver's seat of a vehicle is taken as an example. The air bag of the document is formed of two circular sheets (panels). The edges of them are sewed together, and the whole air bag forms a chamber. The sheet on the side opposite to the occupant side is provided with a vent hole. A lid member is provided so as to cover this vent hole.

In the air bag of the document, when the air bag is inflated, until the gas pressure of the inside of the air bag reaches the predetermined value, the vent hole is covered by the lid member and gas is prevented from being discharged through the vent hole. Therefore, the inside of the air bag quickly achieves a high pressure, and the air bag quickly deploys.

When the gas pressure of the inside of the air bag exceeds the predetermined value, the lid member is pushed to open and the vent hole is opened. Therefore, when the occupant crashes into the air bag, gas is discharged from the air bag through the vent hole, thereby absorbing the impact exerted on the occupant.

### Problems to be Solved by the Invention

It is an object of the present invention to provide an air bag such that a predetermined value of the inner pressure of the air bag at which a vent hole is opened can be easily set to a target value, and an air bag apparatus including this air bag.

### Means for Solving the Problems

According to the invention, this object is achieved by an air bag as defined in claim 1 and an air bag apparatus as defined in claim 5. The dependent claims define preferred and advantageous embodiments of the invention.

In the present invention, an air bag includes a vent hole, and a control device for opening and closing the vent hole, the control device closing the vent hole until the inner pressure of the air bag reaches a predetermined value and opening the vent hole when the inner pressure of the air bag has the predetermined value or more. The control device includes a sheet that is disposed on the outside of the air bag and joined to the edge of the vent hole, an opening that is provided in the sheet and over the vent hole, and a joiner that closes the vent hole by joining a first half and a second half of the sheet disposed across the opening from each other until the inner pressure of the air bag reaches the predetermined value, and opens the vent hole by releasing the joining when the inner pressure of the air bag has the predetermined value or more.

The joiner may include a seam or adhesive.

According to a preferred embodiment of the invention, the joiner is linear, and this linear joiner has a V-shaped portion projecting toward the vent hole.

According to another preferred embodiment of the invention, the first half of the sheet is provided with an extension extending away from the joiner, and the extension is pulled and thereby facilitates separation of the joining of the first half and the second half.

An air bag apparatus of the invention includes an air bag, a retainer holding the air bag, and an inflator supplying gas to the air bag. The air bag is an air bag as mentioned above.

The air bag may be provided with an inflator-attaching opening for inserting the inflator, and the extension may be joined to the retainer, the inflator, or the air bag, in the vicinity of the edge of the inflator-attaching opening.

### Advantages

In the air bag and the air bag apparatus of the present invention, a sheet having an opening to be located over a vent hole is disposed on the outside of the air bag and joined to the edge of the vent hole. A first half and a second half of the sheet with the opening in between are joined together with a joiner, thereby closing the vent hole. This joiner is configured to separate the joining of the first half and the second half of the sheet when the inner pressure of the air bag has a predetermined value or more.

When this air bag is inflated, until the inner pressure of the air bag reaches the predetermined value, the vent hole is closed by the sheet and gas is not discharged from the air bag through the vent hole. Therefore, the air bag quickly achieves a high inner pressure, and deploying of the air bag is facilitated (accelerated). When the inner pressure of the air bag has the predetermined value or more, the joining of the first half and the second half of the sheet are released from the joiner, and the vent hole is opened. Therefore, gas is discharged through the vent hole, and the impact is sufficiently absorbed.

In the present invention, since the vent hole is completely closed, the inner pressure of the air bag is exerted on the joiner without loss through the vent hole and the opening. Therefore, when the inner pressure of the air bag has the predetermined value or more, the joining by the joiner is released without fail.

A joiner including a seam or adhesive or the like is simple, easy, and preferable.

By providing a linear joiner of a seam or adhesive and making the joiner partly V-shaped so as to project toward the vent hole, the stress concentrates at the V-shaped portion, and release of joining by the joiner starts from the V-shaped portion without fail.

As the inflation of the air bag progresses, the first half of the sheet is pulled by the extension so as to separate from the joiner. Therefore, separation of the joining of the first half and the second half of the sheet starts without fail.

In this case, it is preferable to join the extension to the retainer, the inflator, or the air bag, in the vicinity of the edge of the inflator-attaching opening of the air bag. In any case, as the inflation of the air bag progresses, the first half of the sheet is pulled by the extension toward the inflator-attaching opening. Therefore, separation of the joining of the first half and the second half of the sheet starts without fail.

### Brief Description of the Drawings

Fig. 1 is a perspective view showing an air bag according to an embodiment with a vent hole in the closed state, and a perspective view showing the air bag with the vent hole in the open state.
Fig. 2 shows plan views showing a rear panel of the air bag of Fig. 1 and a sheet for opening/closing control of the vent hole.
Fig. 3 shows perspective views showing a first half and a second half of the sheet of Fig. 2 before and after they are joined together.
Fig. 4 contains sectional views of the vent hole and its vicinity of an air bag apparatus including the air bag of Fig. 1 when the air bag is inflated.

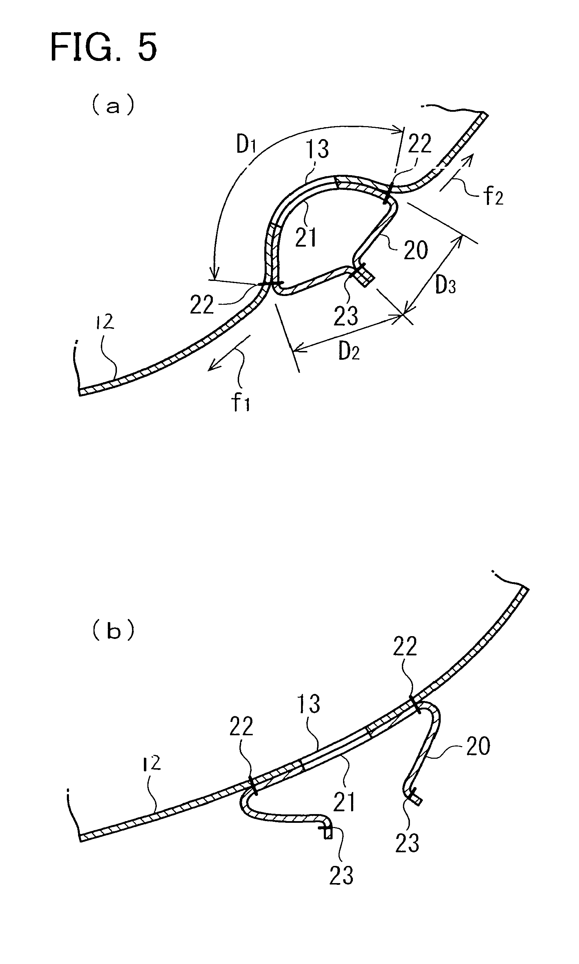

Sectional views of a vent hole and its vicinity of an air bag according to another embodiment are shown in Fig. 5.

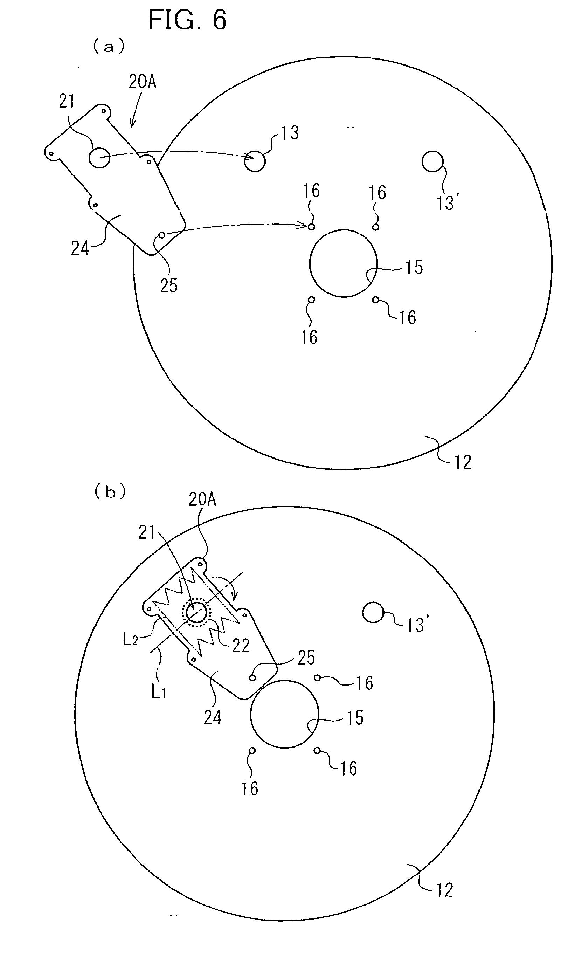

Fig. 6 consists of plan views of a rear panel of an air bag according to still another embodiment before and after a sheet is attached to the rear panel.

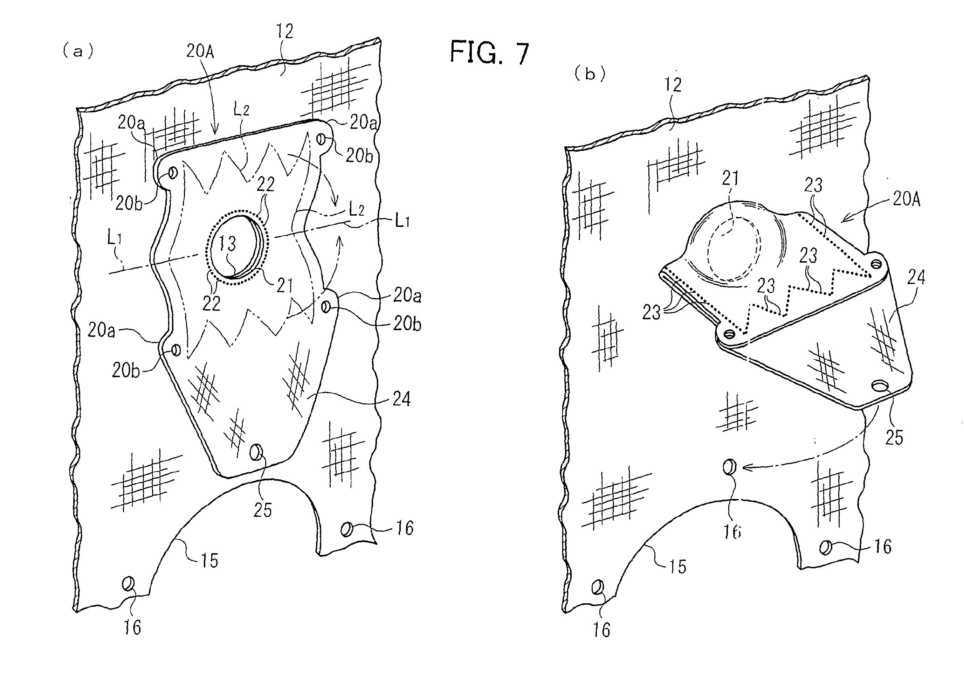

Perspective views of the sheet of Fig. 6 before and after a first half and a second half of the sheet are joined together are shown in Fig. 7.

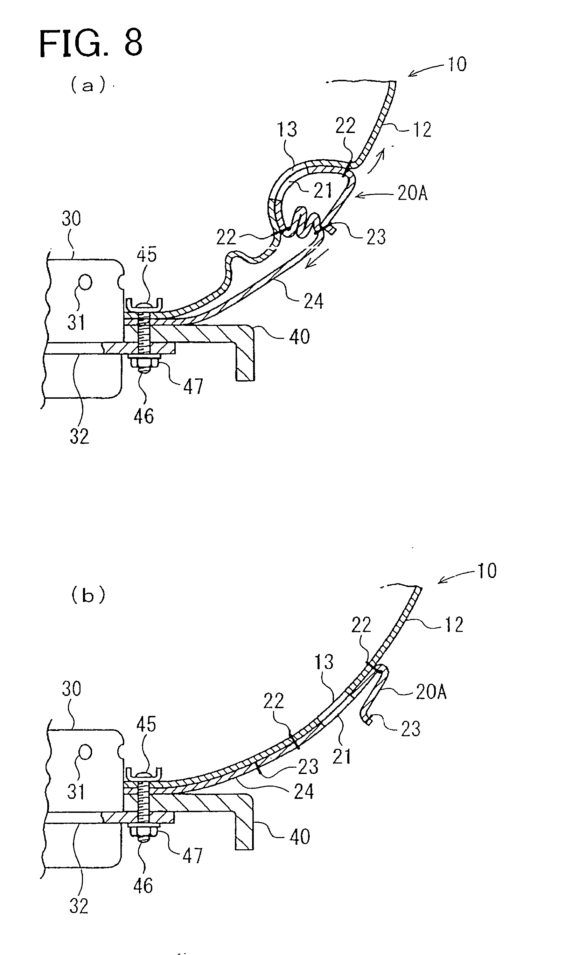

Fig. 8 shows sectional views of an air bag apparatus including the air bag of Fig. 6 when a vent hole is in the closed state and when the vent hole is in the open state.

### Best Mode for Carrying Out the Invention

The preferred embodiments of the present invention will now be described with reference to the drawings.

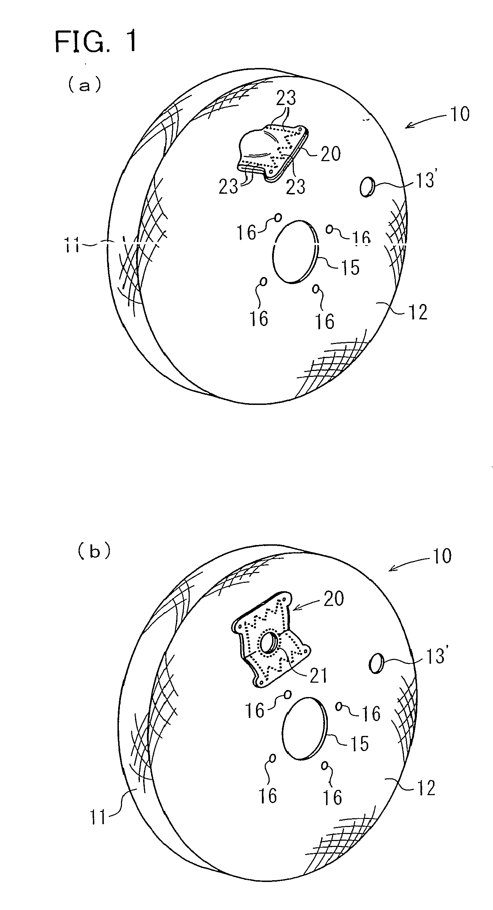

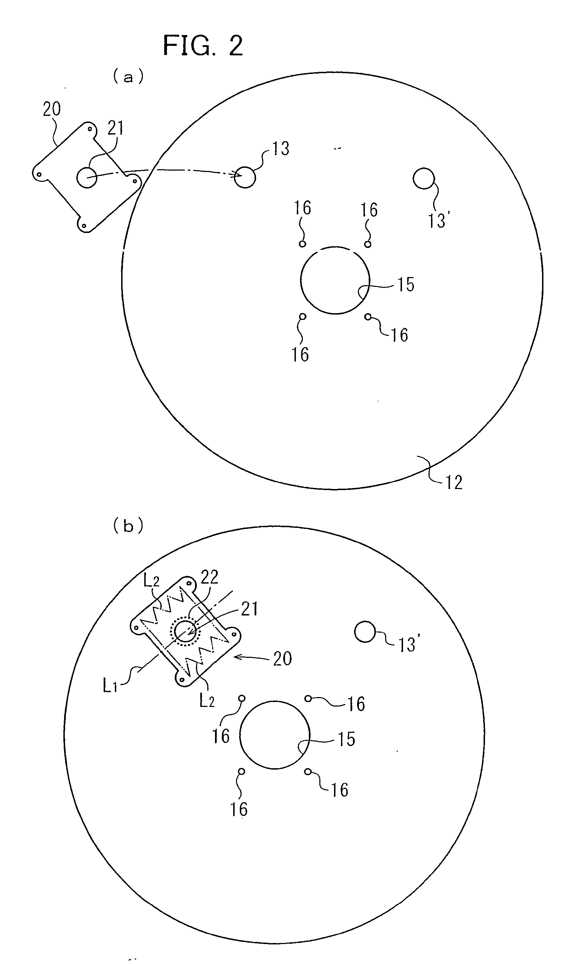

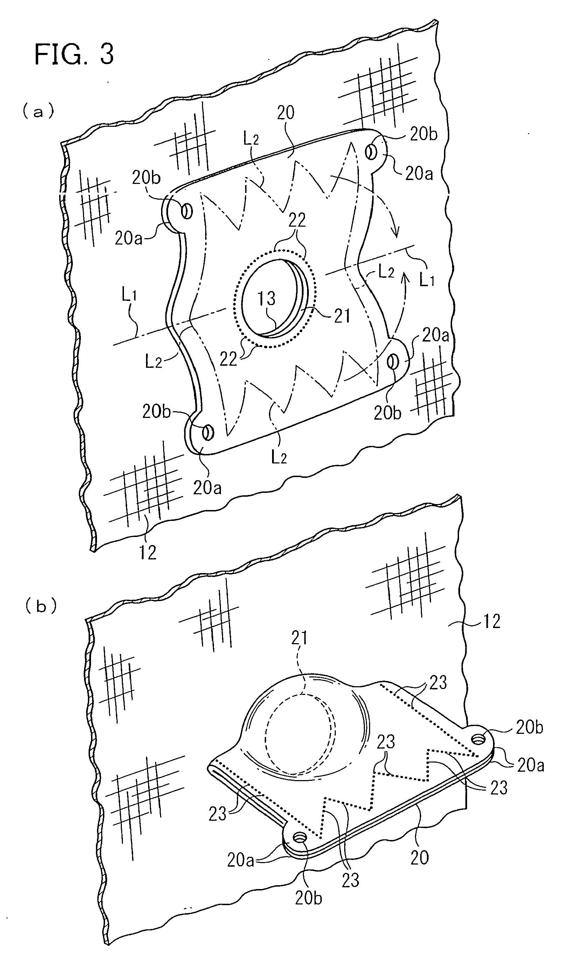

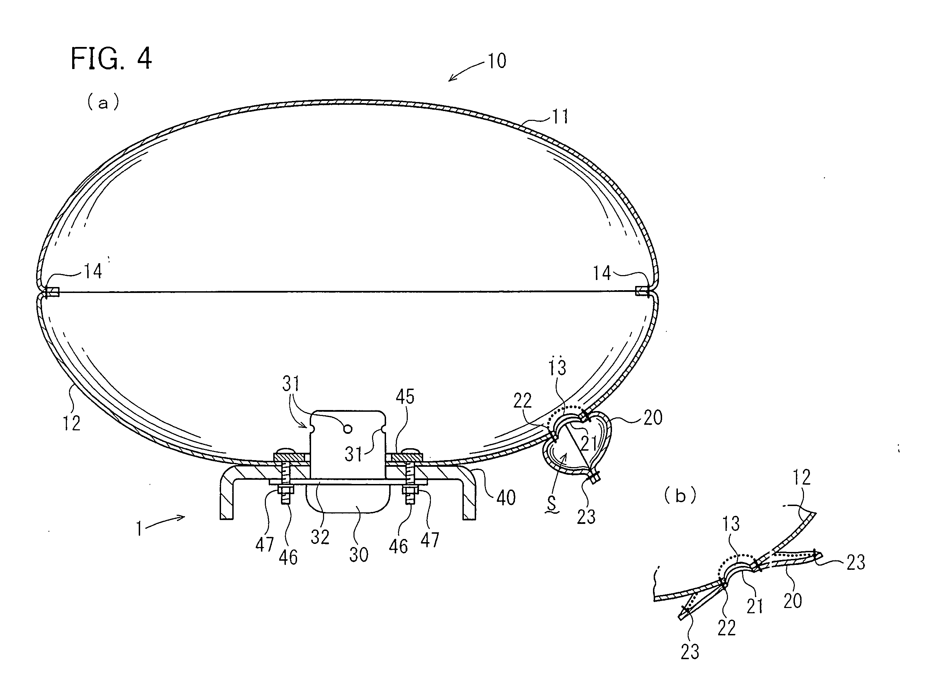

Fig. 1(a) is a perspective view showing an air bag according to an embodiment with a vent hole closed. Fig. 1(b) is a perspective view showing the air bag with the vent hole open. Fig. 2(a) is an exploded view (plan view) showing a rear panel of the air bag and a sheet for opening/closing control of the vent hole. Fig. 2(b) is a plan view of the rear panel with the sheet attached. Fig. 3(a) is a perspective view showing a first half and a second half of the sheet before they are joined together. Fig. 3(b) is a perspective view showing the first half and the second half of the sheet after they are joined together. Fig. 4(a) is a sectional view of an air bag apparatus including the air bag when the air bag is inflated and the vent hole is closed. Fig. 4(b) is a sectional view of the vent hole and its vicinity in the air bag apparatus when the vent hole is open.

In this embodiment, the air bag 10 is an air bag for the driver's seat in a vehicle.

This air bag 10 includes a front panel 11 that forms a surface facing the occupant, a rear panel 12 that forms a surface opposite to the surface facing the occupant, vent holes 13 and 13' through which the inside and outside of the air bag 10 communicate, a sheet 20 that serves as a device for opening/closing control of the vent hole 13, and so on.

The front panel 11 and the rear panel 12 are each formed of a circular woven fabric. By placing the front panel 11 and the rear panel 12 one over the other and sewing the edges of them together, a main body of the air bag 10 is formed. Reference numeral 14 in Fig. 4(a) denotes a seam of this sewing.

In the center of the rear panel 12, an inflator-attaching opening 15 is provided. A below-described inflator 30 is inserted into the inflator-attaching opening 15. Around this inflator-attaching opening 15, bolt holes 16 are provided. Through the bolt holes 16, stud bolts 46 of a below-described holding ring 45 are passed.

In this embodiment, the vent holes 13 and 13' are disposed in the upper half of the rear panel 12, above the inflator-attaching opening 15. The word "upper" here designates the upper position in Fig. 2, which corresponds to the upper position when the air bag 10 is installed in a vehicle. The vent holes 13 and 13' are disposed at different positions from each other in the horizontal direction. In this embodiment, one of the vent holes 13 (the left one in Fig. 2) is provided with the sheet 20.

In this embodiment, the sheet 20 is substantially rectangular. Around the center of the sheet 20, an opening 21 is provided. The opening 21 has substantially the same size and shape as the vent hole 13. The sheet 20 is disposed on the outer side of the rear panel 12 such that the opening 21 is located over the vent hole 13. The edge of the opening 21 is joined to the edge of the vent hole 13. Reference numeral 22 denotes a seam that joins the edges of the opening 21 and the vent hole 13 together. This seam 22 circularly extends around the vent hole 13 and the opening 21. This seam 22 is a high-strength seam that does not break even when the inner pressure of the air bag 10 has a predetermined value or more.

In this embodiment, as shown in Fig. 2(b), the sheet 20 is disposed such that its longitudinal direction corresponds to a radial direction of the rear panel 12.

As shown in Figs. 3(a) and 3(b), this sheet 20 is folded in half at a folding line L₁ that passes through the middle in the longitudinal direction of the sheet 20 (across the vent hole 13 (and the opening 21)) and is substantially perpendicular to the longitudinal direction. The first half and the second half are disposed in the longitudinal direction with the vent hole 13 in between, and are put one over the other. The peripheries put one over the other are sewed together with a tear seam 23 serving as a joiner. The two-dot chain line L₂ in Fig. 3(a) shows the line to be sewed with the tear seam 23. In this way, the vent hole 13 is closed by the sheet 20.

As shown, the tear seam 23 extends from one end of a folding part (folding line L₁) that forms one side of the sheet 20 folded in half (hereinafter referred to as half-folded sheet), along the other three sides, around the periphery of the half-folded sheet 20, to the other end of the folding part (folding line L₁). In this way, the half-folded sheet 20 forms a bag, and a chamber S is formed therein. This chamber S communicates with the inside of the air bag 10 through the opening 21 and the vent hole 13.

The tear seam 23 breaks to separate the joining of the first half and the second half of the sheet 20 when the inner pressure in the chamber S, that is to say the inner pressure of the air bag 10, has the predetermined value or more.

As shown, in this embodiment, the part of the tear seam 23 opposite the folding part (holding line L₁) of the half-folded sheet 20 extends in a zigzag pattern, thereby forming a number of V-shaped portions projecting toward the opening 21.

In this embodiment, as shown in Fig. 3(a), an ear 20a is provided at each end of each long side of the sheet 20. Each ear 20a is provided with an insertion hole 20b into which a jig (not shown) is inserted in order to easily and accurately sew the periphery of the half-folded sheet 20.

When the sheet 20 is folded in half at the folding line L₁, the ears 20a, 20a at the ends of each long side of the sheet 20 are located one over the other. A jig is inserted into each of the insertion holes 20b, 20b of the ears 20a, 20a located one over the other. This prevents misalignment between the first half and the second half of the half-folded sheet 20, and the peripheries of them can be joined with the tear seam 23 easily and accurately.

The air bag apparatus 1 includes the air bag 10, an inflator 30 for inflating the air bag 10, a retainer 40 to which the air bag 10 and the inflator 30 are attached, a holding ring 45 for fixing the air bag 10 to the retainer 40, and a module cover (not shown) covering a folded body of the air bag 10 attached to the retainer 40.

In this embodiment, the inflator 30 is substantially cylindrical. In the circumferential surface at the distal end side of the cylinder, gas blowing outlets 31 are provided. On the circumferential surface in the middle of the cylinder, a flange 32 for fixing the inflator 30 to the retainer 40 is provided. This flange 32 is provided with bolt holes (not shown) into which the stud bolts 46 of the holding ring 45 are inserted.

The retainer 40 is a rectangular plate. In the middle of the surface of the plate, an inflator-attaching opening (reference numeral omitted) is provided. In addition, around this inflator-attaching opening, bolt holes (not shown) are provided. Into the bolt holes, the stud bolts 46 of the holding ring 45 are inserted. In the periphery of this retainer 40, legs 41 for attaching the module cover are provided.

To attach the air bag 10 to the retainer 40, the edge of the inflator-attaching opening 15 of the rear panel 12 is put over the edge of the inflator-attaching opening of the retainer 40, and is then pressed against the retainer 40 with the holding ring 45. From the side opposite to this, the distal end side of the inflator 30 is inserted into the inflator-attaching opening of the retainer 40, and the flange 32 is put on the back side of the retainer 40. The distal end side (gas blowing outlets 31) of the inflator 30 is disposed inside the air bag 10 through the inflator-attaching opening 15 of the rear panel 12.

The stud bolts 46 projecting from the underside of the holding ring 45 are inserted into the bolt holes 16 of the rear panel 12, the bolt holes of the retainer 40, and the bolt holes of the flange 32. In this manner nuts 47 are tightened on the stud bolts 46 at the end so as to fix the air bag 10 (rear panel 12) and the inflator 30 (flange 32) to the retainer 40. Next, the module cover is attached to the retainer 40 so as to cover the folded body of the air bag 10. In this way, the air bag apparatus 1 is constructed.

The module cover is constructed to break and open when the air bag 10 is inflated.

This air bag apparatus 1 is installed in the steering wheel (not shown) of a vehicle.

When the vehicle crashes or the like, the inflator 30 is activated and gas is discharged in the air bag 10. The air bag 10 is inflated by the gas, opens the module cover, and deploy in the compartment of the vehicle so as to protect the driver.

In this air bag 10, until the inner pressure of the air bag 10 reaches a predetermined value, the vent hole 13 is closed by the sheet 20 and gas is not discharged from the air bag 10 through the vent hole 13. Therefore, the air bag 10 quickly achieves a high inner pressure, and deployment of the air bag 10 is facilitated (accelerated).

When the inner pressure of the air bag 10 (the inner pressure of the chamber S inside the sheet 20 communicating with the air bag 10 through the vent hole 13 and the opening 21) has the predetermined value or more, as shown in Figs. 4(a) and 4(b), the tear seam 23 breaks to separate the first half and the second half of the sheet 20, and the vent hole 13 is opened.

When an occupant crashes into the air bag 10, gas is discharged out of the air bag 10 through the vent hole 13 so as to absorb the impact exerted on the occupant.

In this embodiment, the other vent hole 13' is always the open state. Therefore, when an occupant crashes into the air bag 10 before the inner pressure of the air bag 10 reaches the predetermined value, gas is discharged from the air bag 10 through the vent hole 13' so as to absorb the impact.

In this air bag 10, the gas pressure in the air bag 10 is exerted on the tear seam 23 through the vent hole 13 and the opening 21 without loss. Therefore, when the inner pressure of the air bag 10 has the predetermined value or more, the tear seam 23 breaks without fail and the vent hole 13 is opened.

In this embodiment, since the tear seam 23 extending in the periphery of the half-folded sheet 20 is partly V-shaped, the stress concentrates at the V-shaped portions, and breaking of the tear seam 23 starts without fail.

Figs. 5(a) and 5(b) are sectional views of a vent hole and its vicinity in an air bag according to another embodiment. In Fig. 5(a), the vent hole is the closed state. In Fig. 5(b), the vent hole is the open state.

The seam 22 circles the vent hole 13 and the opening 21 of the sheet 20 so as to join the edges of them together. In Fig. 5(a), D1 shows the distance from the part of the seam 22 on the side of the center of the rear panel 12 to the part of the seam 22 on the side of the circumference of the rear panel 12 across the vent hole 13. That is to say, D1 shows the length of the part of the sheet 20 joined with the edge of the vent hole 13.

The first half and the second half of the sheet 20 are disposed across the vent hole 13 from each other. The top edges ot the first half and the second half are joined together by the tear seam 23. D2 shows the distance from the seam 22 to the tear seam 23 in the first half. D3 shows the distance from the seam 22 to the tear seam 23 in the second half.

In this embodiment, D1 is greater than the sum of D2 and D3.

Other components of this embodiment are the same as those of the embodiment shown in Figs. 1 to 4. The same reference numerals are used to designate the same components.

In this embodiment, when the air bag is inflated, first, as shown in Fig. 5(a), before the part of the rear panel 12 around the vent hole has been stretched toward the circumference of the air bag, a continuum of the first half and the second half of the sheet 20 joined by the tear seam 23 is stretched between the seam 22 on the side of the center of the air bag and the seam 22 on the side of the circumference of the air bag. Therefore, as the inflation of the air bag progresses, tensile forces are exerted on the first half and the second half of the sheet 20 in the directions in which the first half and the second half are separated as shown by arrows f1 and f2. This facilitates the release of the joining of the first half and the second half of the sheet 20 from the joiner by the tear seam 23.

After that, when the inner pressure of the air bag has the predetermined value or more, as shown in Fig. 5(b), the tear seam 23 breaks, the first half and the second half of the sheet 20 are separated, and the vent hole 13 is opened.

Figs. 6(a) and 6(b) are plan views of the rear panel of an air bag according to still another embodiment. In Fig. 6(a), a sheet is not attached to the rear panel yet. In Fig. 6(b), the sheet is attached to the rear panel. Figs. 7(a) and 7(b) are perspective views of the sheet. In Fig. 7(a), a first half and a second half of the sheet are not joined together yet. In Fig. 7(b), the first half and the second half are joined together. Figs. 8(a) and 8(b) are sectional views of an air bag apparatus including this air bag. In Fig. 8(a), a vent hole is a closed state. In Fig. 8(b), the vent hole is an open state.

In this embodiment, the sheet 20A is provided with an extension 24. The first half is disposed across the vent hole 13 from the second half and on the side of the center of the rear panel 12. The extension 24 extends from the end of the first half toward the center of the rear panel 12. As shown in Fig. 6(b), when the first half and the second half are not joined and the sheet 20A is extended flatly along the surface of the rear panel 12, the distal end side of the extension 24 is located on the edge of the inflator-attaching opening 15 in the center of the rear panel 12. At the distal end side of the extension 24, a bolt hole 25 is provided. The bolt hole 25 is located over one of the bolt holes 16 around the inflator-attaching opening 15.

As shown in Figs. 7(a) and 7(b), this sheet 20A is folded in half at the folding line L₁ across the vent hole 13 (opening 21). The first half and the second half with the vent hole 13 in between are put one over the other. The first half and the second half are sewed together with a tear seam 23 along the edge of the second half, thereby closing the vent hole 13. The top edge of the second half is sewed around the tip end of the extension 24. Also in this embodiment, the part of the tear seam 23 along the top edge of the second half extends in a zigzag pattern, thereby forming V-shaped portions projecting toward the vent hole 13.

To attach the air bag 10 having such a structure to the retainer 40, the distal end side of the extension 24 is put on the edge of the inflator-attaching opening 15 of the rear panel 12 such that the bolt hole 25 is positioned over one of the bolt holes 16. The edge of the inflator-attaching opening 15 of the rear panel 12 is put over the edge of the inflator-attaching opening of the retainer 40. The distal end side of the extension 24, the edge of the inflator-attaching opening 15 of the rear panel 12 are pressed against the edge of the inflator-attaching opening of the retainer 40 with the holding ring 45. At this time, the stud bolts 46 of the holding ring 45 are inserted into the bolt holes 16 and 25 and the bolt hole of the retainer 40.

Next, the distal end side of the inflator 30 is inserted into the inflator-attaching opening of the retainer 40. At the same time, the stud bolts 46 are inserted into the bolt holes of the flange 32. The flange 32 is then put on the back side of the retainer 40, and the nuts 47 are tightened on the stud bolts 46. In this way, the air bag 10 (rear panel 12), the distal end side of the extension 24, and the inflator 30 (flange 32) are fixed to the retainer 40.

Other components of the air bag 10 and the air bag apparatus including the air bag 10 of this embodiment are the same as those of the embodiment shown in Figs. 1 to 4. The same reference numerals are used to designate the same components.

In this embodiment, when the air bag 10 is inflated, as shown in Fig. 8(a) by arrows, as the inflation of the air bag 10 progresses, the distal end side of the first half of the sheet 20A is pulled through the extension 24 toward the center of the air bag 10, and the second half is pulled toward the circumference of the air bag 10. Therefore, tensile forces are exerted on the first half and the second half of the sheet 20A in the directions in which the first half and the second half are separated. This facilitates the release of the joining of the first half and the second half from the joiner by the tear seam 23.

After that, when the inner pressure of the air bag 10 has the predetermined value or more, as shown in Fig. 8(b), the tear seam 23 breaks, the first half and the second half of the sheet 20A are separated, and the vent hole 13 is opened.

The above-described embodiments are illustrative only of the present invention, and the present invention is not limited to the above-described embodiments.

For example, the shape, number, and arrangement of the vent holes are not limited to the above-described embodiments. The structure of the sheet serving as a control device for opening and closing the vent hole is not limited to the above-described embodiments, either. In the case of a plurality of vent holes, it is possible to provide a sheet in every vent hole. Alternatively, it is possible to provide a sheet only in some of the vent holes. Alternatively, it is possible to close the plurality of vent holes with a common sheet.

The present invention is not limited to an air bag and air bag apparatus for the driver's seat of a vehicle, and can be applied to other various air bags and air bag apparatuses.

## Claims

1. An air bag comprising:
a vent hole (13); and
a control device (20) tor opening and closing the vent hole (13), the control device closing the vent hole (13) until the inner pressure of the air bag (10) reaches a predetermined value and opening the vent hole (13) when the inner pressure of the air bag (10) has the predetermined value or more,
wherein the control device includes:
a sheet (20; 20A) that is disposed on the outside of the air bag (10) and joined to the edge of the vent hole (13);
an opening (21) that is provided in the sheet (20; 20A) and over the vent hole (13); and
a joiner (23) that closes the vent hole (13) by joining a first half and a second half of the sheet (20; 20A) disposed across the opening (21) from each other until the inner pressure of the air bag (10) reaches the predetermined value, and opens the vent hole (13) by releasing the joining when the inner pressure of the air bag (10) has the predetermined value or more.

2. The air bag according to Claim 1, wherein the joiner comprises a seam (23) or adhesive.

3. The air bag according to Claim 1 or 2, wherein the joiner (23) is linear, and this linear joiner (23) has a V-shaped portion projecting toward the vent hole (13).

4. The air bag according to any one of Claims 1 to 3, wherein the first half of the sheet (20A) is provided with an extension (24) extending away from the joiner (23), and the extension (24) is pulled and thereby facilitates separation of the joining of the first half and the second half.

5. An air bag apparatus comprising:
an air bag (10);
a retainer (40) holding the air bag (10); and
an inflator (30) supplying gas to the air bag (10),
wherein the air bag (10) is an air bag according to any one of Claims 1 to 4.

6. The air bag apparatus according to Claim 5, wherein the air bag (10) is an air bag according to Claim 4, the air bag (10) is provided with an inflator-attaching opening (15) for inserting the inflator (30), and the extension (24) is connected to the retainer (40), the inflator (30), or the air bag (10), in the vicinity of the edge of the inflator-attaching opening (15).
